(19) **Europäisches Patentamt**
**European Patent Office**
**Office européen des brevets**

(11) **EP 1 249 068 B1**

(12) **EUROPÄISCHE PATENTSCHRIFT**

(45) Veröffentlichungstag und Bekanntmachung des Hinweises auf die Patenterteilung:
**11.08.2010 Patentblatt 2010/32**

(51) Int Cl.:
***H02P 9/02*** (2006.01)   ***H02P 21/00*** (2006.01)

(21) Anmeldenummer: **01953810.7**

(86) Internationale Anmeldenummer:
**PCT/DE2001/002368**

(22) Anmeldetag: **27.06.2001**

(87) Internationale Veröffentlichungsnummer:
**WO 2002/011276 (07.02.2002 Gazette 2002/06)**

(54) **VERFAHREN ZUR SCHÄTZUNG DER POLRADLAGE AN EINER KLAUENPOLMASCHINE**

METHOD FOR ESTIMATING THE POSITION OF THE CLAW POLE ROTOR OF A CLAW POLE MACHINE

PROCEDE POUR EVALUER LA POSITION D'UNE ROUE POLAIRE D'UNE MACHINE A POLES A GRIFFES

(84) Benannte Vertragsstaaten:
**DE ES FR GB IT**

(30) Priorität: **28.07.2000 DE 10036869**

(43) Veröffentlichungstag der Anmeldung:
**16.10.2002 Patentblatt 2002/42**

(73) Patentinhaber: **ROBERT BOSCH GMBH**
**70442 Stuttgart (DE)**

(72) Erfinder:
• **KOELLE, Gerhard**
**75446 Wiernsheim (DE)**
• **REUTLINGER, Kurt**
**70174 Stuttgart (DE)**
• **PUSHKOLLI, Beqir**
**71642 Ludwigsburg (DE)**

(56) Entgegenhaltungen:
DE-A- 4 115 338   DE-A- 19 849 239
US-A- 5 495 162

• **BROESSE A ET AL: "POSITIONING ACCURACY OF A SENSORLESS CONTROLLED DRIVE SYSTEM" EPE '95: 6TH. EUROPEAN CONFERENCE ON POWER ELECTRONICS AND APPLICATIONS. SEVILLA, SEPT. 19 - 21, 1995, EUROPEAN CONFERENCE ON POWER ELECTRONICS AND APPLICATIONS, BRUSSELS, EPE ASSOCIATION, B, Bd. 3 CONF. 6, 19. September 1995 (1995-09-19), Seiten 3167-3172, XP000538307**
• **BOBRICK ET AL: "The Kalman-Bucy filter accuracy in the guaranteed estimation problem" PROCEEDINGS OF THE CONFERENCE ON DECISION AND CONTROL. BRIGHTON, DEC. 11 - 13, 1991, NEW YORK, IEEE, US, Bd. 1 CONF. 30, 11. Dezember 1991 (1991-12-11), Seiten 3066-3071, XP010055507 ISBN: 0-7803-0450-0**

**Beschreibung**

Technisches Gebiet

Zur Versorgung des Bordnetzes von Kraftfahrzeugen mit elektrischer Energie werden Drehstromgeneratoren eingesetzt. Wegen seiner robusten Bauform und der preisgünstigen Herstellbarkeit hat sich für die Anwendung in Kraftfahrzeugen der Klauenpolgenerator durchgesetzt. Dieser enthält ein geblechtes Ständerpaket mit einer Dreiphasenwicklung. In der Wicldung wird durch das Drehfeld ein Dreiphasen-Wechselstrom erzeugt. Die Batterie eines Kraftfahrzeuges erfordert zum Aufladen einen Gleichstrom, weswegen das Bordnetz ein Gleichspannungsnetz ist, so daß der Drehstromgenerator über eine Gleichrichterbrücke mit dem Bordnetz verbunden ist.

Stand der Technik

Die Erzeugung elektrischer Leistung in Kraftfahrzeugen erfolgt durch Klauenpolgeneratoren, die über eine passive Dioden-Gleichrichter-Brücke mit dem Gleichspannungsbordnetz eines Kraftfahrzeuges verbunden sind. Die Drehstromgeneratoren werden in der Regel so dimensioniert, daß sie bereits bei Leerlauf der Verbrennungskraftmaschine im Kraftfahrzeug die geforderte elektrische Leistung bereitstellen können. Anstelle von passiven Dioden-Gleichrichter-Brücken können auch Puls-Wechsel-Richter eingesetzt werden, die bereits eine Abgabe elektrischer Leistung durch einen Drehstromgenerator bei Drehzahlen im unteren Leerlaufbereich einer Verbrennungskraftmaschine ermöglichen.

Klauenpolmaschinen werden durch Regler oder Reglerstrukturen geregelt, die die Transformation von Strömen und Spannungen der Ständerwicklungen der elektrischen Maschine in das d, q-System aus dem R-S-T-Dreiphasensystem sowie die Rücktransformation der Strom- und Spannungswerte aus dem d, q-System wieder in das R-S-T-Dreiphasensystem erfordern. Um die Transformation anhand einer Matrix eindeutig vornehmen zu können, ist es erforderlich, die Winkellage des Polrades an der elektrischen Maschine zu kennen, so daß die Transformation und die sich anschließende Rücktransformation eindeutig ist und keine Mehrfachzuordnungen auftreten können. Die Polradlage wird üblicherweise durch einen eigens dafür vorgesehenen Sensor ermittelt, den Polradgeber.

Neben der Verwendung eines Polradlagegebers kann die Polradlage eines Klauenpolgenerators durch einen Zustandsbeobachter erfolgen, wobei durchaus auch ein reduzierter Zustandsbeobachter eingesetzt werden kann. Die Zustandsbeobachter sind jeweils so ausgelegt, daß diese den Systemzustand nach einer Änderung einer Zustandsgröße rekonstruieren. Mittels eines Zustandsbeobachters kann jedoch in einer Regelstrecke eine Regelstruktur auftreten bei der stochastische Störungen nicht oder nur unzureichend detektiert und ausgeregelt werden.

Darstellung der Erfindung

Mit dem erfindungsgemäß vorgeschlagenen Verfahren läßt sich einerseits der Einsatz eines Polradladegebers als zusätzliches Bauteil an einem Klauenpolgenerator vermeiden, so daß die mit seiner Verwendung einhergehenden Kosten zur Messung der Polradwinkellage entfallen können.

Andererseits kann durch die Verwendung eines Filterelementes, vorzugsweise eines Kalman-Bucy-Filterelementes nunmehr auch eine Erfassung in einer Regelstrecke eingehende stochastische Einflüsse erfolgen, was einen Fortschritt darstellt, da mit Zustandsbeobachtern lediglich eine verzögert erfolgende Rekonstruktion des Systemzustandes nach der Änderung einer Systemzustandsgröße möglich ist. Bei den bisher verwendeten Zustandsbeobachtern wird eine Transformationsmatrix für die Transformation von d, q-System in das R-S-T-System und umgekehrt anhand einer Polvorgabe ermittelt. Von der Genauigkeit der Polvorgabe hängt mithin die Genauigkeit der Transformation und der Rücktransformation ab. Beim eingesetzten Filterelement hingegen resultiert die Genauigkeit der Transformation aus der Optimierung eines erforderlichen Gütemaßes. Durch Verwendung dieses Gütemaßes bei der Ermittlung der Transformation d, q-System ins R-S-T-System der elektrischen Maschine, ist eine wesentlich verbesserte Genauigkeit erreichbar.

Zeichnung

Anhand der Zeichnung wird die Erfindung nachstehend detaillierter erläutert.
Es zeigt:

Fig. 1 eine schematische Darstellung eines Klauenpolgenerators mit Läufer- und Ständerwicklung,

Fig. 2 eine äquivalente Darstellung des Klauenpolgenerators im Zustandsraum,

Fig. 3    die Unterteilung des Systems Klauenpolgenerator in ein beobachtbares und ein unbeobachtbares Untersystem und

Fig. 4    eine nähere Darstellung des beobachtbaren Untersystems und des Kalman-Bucy- Filters.

Fig. 5    eine alternative Ausgestaltungsmöglichkeit des beobachtbaren Untersystems als reduzierter Zustandsbeobachter und

Fig. 6    eine Meßschaltung zur Ermittlung der Läuferposition des Klauenpolgenerators im Stillstand.

<u>Ausführungsvarianten</u>

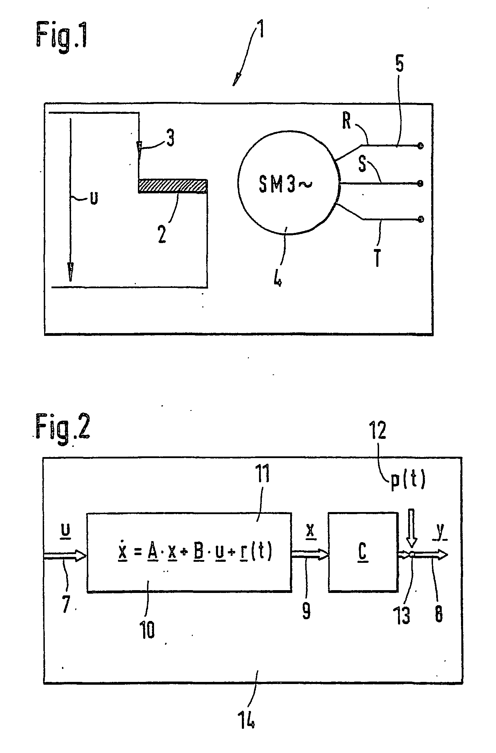

Die Darstellung gemäß Fig. 1 zeigt in schematischer Wiedergabe einen Klauenpolgenerator mit Erreger- und Ständerwicklung.

Aus der Darstellung gemäß Fig. 1 geht die Erregerwicklung 2 hervor, die bei Anlegen einer Spannung an ihren Anschlußklemmen von einem Erregerstrom $i_F$, Bezugszeichen 3, durchflossen wird. Die elektrische Maschine 1, im wesentlichen bestehend aus der Erregerwicklung 2 sowie der Ständerwicklung 4, ist als Drehstrommaschine ausgebildet und wird im R-S-T-System betrieben. Von der Ständerwicklung 4 wegführend sind in der Darstellung gemäß Fig. 1 drei Phasenstränge, den Phasen R, S und T entsprechend, dargestellt.

Fig. 2 gibt die äquivalente Darstellung der elektrischen Maschine 1 gemäß Fig. 1 im Zustandsraum wieder.

Im Zustandsraum 14 ist die elektrische Maschine 1 in äquivalenter Form dargestellt, im wesentlichen charakterisiert durch die Ableitung 10 des Zustandsvektors x. Eingangsgröße ist der Eingangsvektor $\underline{u}$. Der Eingangsvektor $\underline{u}$ besteht aus den transformierten Ständerspannungen $u_d$, $u_q$, aus dem R-S-T-System in das d, q-System transformiert und aus der Läuferspannung an der elektrischen Maschine 1. Die Ableitung des Zustandsvektors 9 ist gegeben durch die Gleichung:

$$\underline{\dot{x}} = \underline{A} \bullet \underline{x} + \underline{B} \bullet \underline{u} + r\,(t).$$

Darin bezeichnet r (t) das Systemrauschen, $\underline{x}$ den Zustandsvektor, der den Erregerstrom $i_F$ und die transformierten Ständerströme $i_d$, $i_q$ enthält, die ebenfalls aus dem R-S-T-System ins d, q-System transferiert sind. Der Ständerstromanteil $i_q$ bestimmt weitestgehend das mit der elektrischen Maschine 1 erzielbare Drehmoment. Der Zustandsvektor 9 wird unter Verknüpfung mit einer Konstanten C auf einen Summationspunkt 13 gegeben, an welchem ein Meßrauschen ρ (t) aufgegeben ist. Unter Berücksichtigung des Meßrauschens ρ (t), charakterisiert durch Bezugszeichen 12, wird der Ausgangsspannungsvektor $\underline{y}$ gebildet, gekennzeichnet durch Bezugszeichen 8.

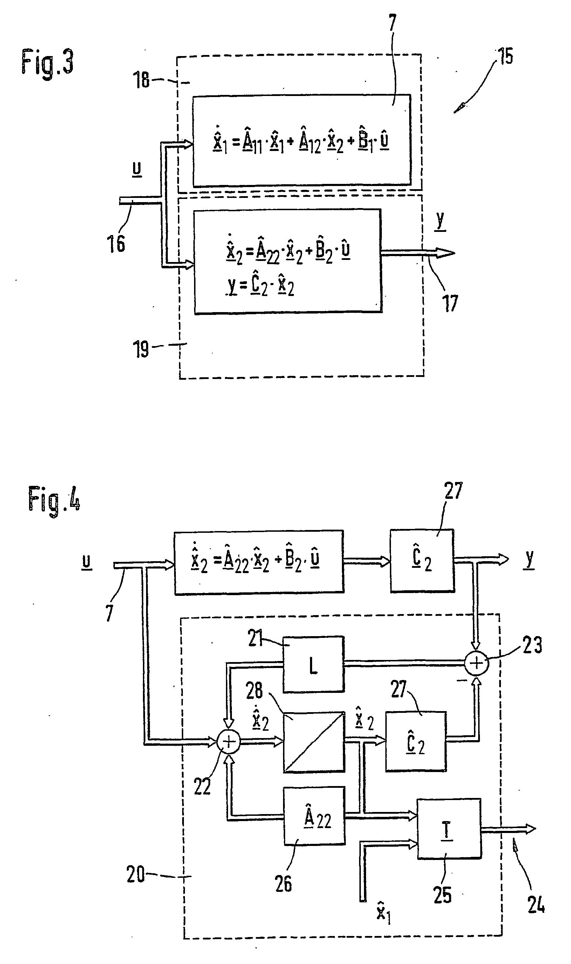

Fig. 3 zeigt die Darstellung des Gesamtsystems elektrische Maschine in Untersystemen.

Die elektrische Maschine 1 läßt sich ausgehend vom Gesamtsystem 15 in ein beobachtbares Untersystem 19 sowie ein unbeobachtbares Untersystem 18 aufteilen. Im beobachtbaren Untersystem 19 lassen sich die Zustandsgrößen durch den Einbau eines Kalman-Bucy-Filterelementes 20 (vergleiche Fig. 4) schätzen. Die Zustandsgrößen des unbeobachtbaren Untersystemes 18 werden hingegen berechnet. Für die Berechnung der Zustandsgrößen dieses Untersystemes werden die mittels des Filterelementes 20 gewonnenen Zustandsgrößen aus dem beobachtbaren Untersystem 19 herangezogen, die jedoch- unter Inkaufnahme einer Vernachlässigung stochastischer Einflüsse in der Regelstrecke - auch über einen Zustandsbeobachter ermittelt werden könnten. Die berechneten wie auch die geschätzten Zustandsgrößen werden durch Verknüpfung mit der Transformationsmatrix rücktransformiert, woraus sich eine geschätzte Polradwinkellage ergibt, die der wirklichen Lage des Polrades entspricht.

Fig. 4 gibt eine detaillierte Darstellung des beobachtbaren Untersystems einer elektrischen Maschine wieder.

Die Darstellung gemäß Fig. 4 außerhalb der gestrichelten Umrandung des Filterelementes 20 entspricht im wesentlichen der Darstellung im Zustandsraum 14 gemäß Fig. 2. Eingangsgröße des Zustandsvektors $\underline{x}_2$ ist der Eingangsvektor $\underline{u}$ gebildet aus zwei Anteilen, die nach Durchlaufen einer Konstante $\underline{C}_2$, gekennzeichnet durch Bezugszeichen 27 in einen Ausgangsvektor $\underline{y}$ übergehen. An einem Submationspunkt 22 innerhalb des Filterelementes 20 werden die Eingangsgrößen des Eingangsvektors 7 $\underline{u}$, einem Integrationsbaustein 28 aufgegeben, von dem aus sie einem die Konstante $\underline{C}_2$ entsprechenden repräsentierenden Baustein zugeführt werden, von dem aus sie einem weiteren Summationspunkt 23 zugeleitet werden. Ausgehend vom Baustein 27 werden dessen Ausgangssignale, mit einem negativen Vorzeichen verknüpft, dem Summationspunkt 23 zugeleitet. Von diesem Summationspunkt 23 zweigt die Zuleitung zu einem L-Matrix-Baustein 21 ab, in welchen bei Verwendung eines Zustandsbeobachters die Matrix mittels einer Polradlagevorgabe ermittelt würde. Bei der Ausgestaltung des Filterelementes 20 als ein Kalman-Bucy-Filterelement wird die Matrix L, Bezugszeichen 21, aus der Optimierung eines quadratischen Gütemaßes ermittelt.

Das allgemeine quadratische Gütekriterium ist durch die nachfolgende Beziehung gegeben:

$$J(u) = \int_{t_0}^{t_f} [x^T(t)\, Q\, x(t) + u^T(t)\, R\, u(t)]\, dt$$

mit

Q = Gewichtungsmadrix
$t_0$ = Anfangszeitpunkt
$t_f$ = Endzeitpunkt

für Mehrfachsysteme, bei denen die Zustandsgrößen selbst physikalische Größen darstellen.

Der Ausgangswert des Matrixbausteins 21 wird dem bereits erwähnten Summationspunkt 22 aufgegeben, dem ebenfalls ein aus dem Baustein 26 stammendes Signal aufgegeben wird. Im Kalman-Bucy-Filterelement 20 ist des weiteren neben den bereits angesprochenen, Konstanten verarbeitenden Bausteinen 26, 27, dem Integrationsbaustein 28 sowie dem L-Matrix bildenden Baustein 21 ein weiterer Baustein 25 zugeordnet, in dem eine Transformationsmatrix abgelegt ist. Aus der Transformationsmatrix 25 des Filterelementes 20 rühren an einem Schätzgrößenausgang 24 die geschätzten Ausgangsgrößen des beobachtbaren Untersystemes 19 des Gesamtsystemes 15 elektrische Maschine 1 her, die einer Berechnung der Zustandsgrößen des unbeobachtbaren Untersystemes 18 (vergleiche Fig. 3) des Gesamtsystemes 15 elektrische Maschine 1 zugrunde gelegt werden können.

Sowohl die mittels des Kalman-Bucy-Filterelementes 20 im beobachtbaren Untersystem 19 geschätzten Zustandsgrößen als auch die aufgrund der geschätzten Zustandsgrößen berechneten Zustandswerte des unbeobachtbaren Untersystemes 19 des Gesamtsystems 15 werden mit der Transformationsmatrix erneut verknüpft, so daß eine Rücktransformation der im R-S-T-System vorliegenden Werte in diejenigen des R-S-T-Systemes Werte des Gesamtsystemes 15 elektrische Maschine erfolgen kann. Diese Werte enthalten dann einen geschätzten Polradwinkelwert, der dem tatsächlich vorliegenden Polradwinkelwert im wesentlichen entspricht oder mit diesem identisch ist.

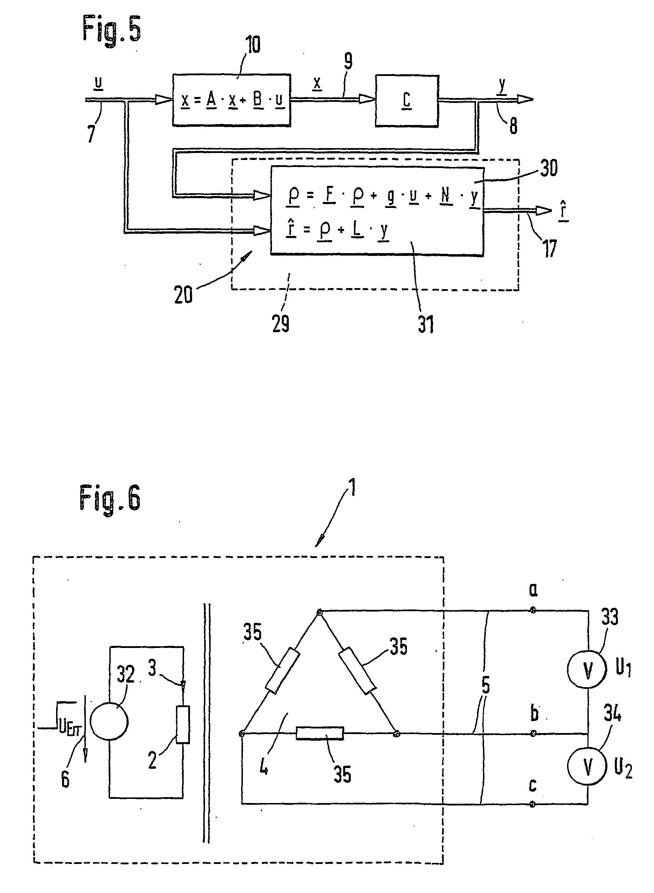

Figur 5 zeigt eine alternative Ausgestaltungsmöglichkeit des beobachtbaren Untersystemes als reduzierten Zustandsbeobachter.

Der Zustandsgrößensektor hat folgendes Aussehen:

$$\underline{x} = \begin{pmatrix} \underline{r} \\ \underline{y} \end{pmatrix}$$

$\underline{r}$ stellt den Vektor der seitlichen Zustandsvariablen dar, im vorliegenden Falle der Kreisfrequenz $\omega$ und des Pokadlagewinkels dar.

$$\begin{pmatrix} \dot{\underline{r}} \\ \dot{\underline{y}} \end{pmatrix} = \begin{pmatrix} \underline{A}_{11} & \underline{A}_{12} \\ \underline{A}_{21} & \underline{A}_{22} \end{pmatrix} \cdot \begin{pmatrix} \underline{r} \\ \underline{y} \end{pmatrix} + \begin{pmatrix} \underline{B}_1 \\ \underline{B}_2 \end{pmatrix} \cdot \begin{pmatrix} \underline{u} \end{pmatrix}$$

Daraus folgen nachfolgende Zustandsgleichungen:

$$\dot{\underline{\rho}} = (\underline{A}_{11} - \underline{L} \cdot \underline{A}_{21}) \cdot \underline{\rho} + (\underline{B}_1 - \underline{L} \cdot \underline{B}_2) \cdot \underline{u} + [(\underline{A}_{11} - \underline{L} \cdot \underline{A}_{21}) \cdot \underline{L} + \underline{A}_{12} - \underline{L} \cdot \underline{A}_{22}] \cdot \underline{y}$$

$$\hat{\underline{r}} = \underline{\rho} + \underline{L} \bullet \underline{y}$$

Während bei der Konfiguration gemäß Fig. 4 durch das Filterelement 20 alle Zustandsgrößen geschätzt werden, brauchen in denjenigen Fällen, in denen q von n Größen gemessen werden sollen, nur (n - q) Zustandsgrößen geschätzt zu werden. Ein solcher Beobachter ist als Beobachter reduzierter Ordnung, mithin als reduzierter Beobachter 29 anzusehen und in der Darstellung gemäß Fig. 5 dargestellt.

Figur 6 zeigt eine Meßschaltung zur Ermittlung der Läuferposition im Stillstand.

Im Erregerkreis 2, 32 ist eine zeitveränderliche Spannungsquelle 32 angeordnet, mit der an der Erregerwicklung 2 ein zeitveränderlicher Erregerstrom $i_F$ 3, eingestellt werden kann. In diesem Falle wird von der Erregerseite 2, 32 der Klauenpolmaschine 1 her ein magnetischer Fluß aufgebaut. Für eine zeitveränderliche Erregerspannung $u_{Err}$ 6, werden die Ständerspannung der Ständerwicklung 4 in den Strängen 5 über zwei Voltmeter 33, 34 gemessen. Die Strangspannungen geben eine Information über die Lage des Läufers der Klauenpolmaschine, da sie vom Polradlagewinkel abhängig sind.

Damit steht eine Anfangsinformation über die Läuferposition für die Zustandsbeobachter 19, 29 gemäß der Figuren 4 und 5 zur Verfügung.

Mit dem erfindungsgemäß vorgeschlagenen Verfahren ist es möglich, eine elektrische Synchronmaschine beispielsweise einen Drehstromgenerator, der nicht vollständig beobachtbar ist, so aufzuteilen, daß sich das Gesamtsystem der elektrischen Maschine in ein beobachtbares und ein unbeobachtbares Untersystem unterteilen läßt. Durch die Verwendung eines Kalman-Bucy-Filterelementes 20 im beobachtbaren Untersystem 19 lassen sich Zustandsgrößen mit einer hohen Vorhersagegenauigkeit schätzen, die eine Berechnung der Zustandsgrößen im an sich unbeobachtbaren Untersystem ermöglichen.

Bezugszeichenliste

| | |
|---|---|
| 1 | Elektrische Maschine |
| 2 | Erregerwicklung |
| 3 | Erregerstrom $i_F$ |
| 4 | Ständerwicklung |
| 5 | Phasenstränge |
| 6 | Erregerspannung |
| 7 | Eingangsvektor $\underline{u}$ |
| 8 | Ausgangsvektor $\underline{y}$ aus transformierten Ständerströmen und $i_F$ |
| 9 | Zustandsvektor x |
| 10 | Ableitung Zustandsvektor $\underline{x}$ |
| 11 | Systemrauschen r (t) |
| 12 | Meßrauschen ρ (t) |
| 13 | Summationspunkt |
| 14 | Zustandsraum |
| 15 | Gesamtsystem |
| 16 | Eingangsgrößen |
| 17 | Ausgangsgrößen |
| 18 | unbeobachtbares Untersystem |
| 19 | beobachtbares Untersystem |
| 20 | Filterelement |
| 21 | L-Matrix |
| 22 | Summationspunkt |
| 23 | Summationspunkt |
| 24 | Schätzgrößenausgang |
| 25 | T-Matrix |
| 26 | Konstante A |
| 27 | Konstante C |
| 28 | Integrationsbaustein |
| 29 | reduzierter Beobachter |
| 30 | Zustandsgleichung |

31 Zustandsgleichung
32 zeitveränderliche Spannungsquelle
33 Spannungsmesser
34 Spannungsmesser
35 Spulen

**Patentansprüche**

1. Verfahren zur Bestimmung der Lage einer rotierenden Komponente zeine Klauenpolgenerators (1), die im R-S-T-System betrieben wird und zu deren Regelung die Transformation der Ständergrößen aus dem R-S-T-System in das d, q-System und umgekehrt erforderlich ist, **dadurch gekennzeichnet, daß** der Klauenpolgenerator (1) als Gesamtsystem (15) in ein unbeobachtbares Untersystem (18) und in ein ein Filterelement (20) enthaltendes beobachtbares Untersystem (19, 29), welches Ausgangsgrößen (17) liefert, unterteilt wird.

2. Verfahren nach Anspruch 1, **dadurch gekennzeichnet, daß** im beobachtbaren Untersystem (19) ein Kalman-Bucy-Filterelement (20) aufgenommen ist, welches die Zustandsgrößen des beobachtbaren Untersystems (19) schätzt.

3. Verfahren nach Anspruch 1, **dadurch gekennzeichnet, daß** im beobachtbaren Untersystem (19) ein Zustandsbeobachter aufgenommen ist, der Zustandsgrößen des beobachtbaren Untersystems (19) nach einer Zustandsänderung neu berechnet.

4. Verfahren nach Anspruch 1, **dadurch gekennzeichnet, daß** die elektrische Maschine (1) durch eine Transformationsmatrix T in ein unbeobachtbares Untersystem (18) und ein beobachtbares Untersystem (19) unterteilt wird.

5. Verfahren nach Anspruch 2, **dadurch gekennzeichnet, daß** eine L-Matrix (21) im Filterelement (20) des beobachtbaren, Untersystemes (19) aus der Optimierung eines quadratischen Gütemaßes ermittelt

$$J(u) = \int_{t_0}^{t_f} [x^T(t) \, Q \, x(t) + u^T(t) \, R \, u(t)] \, dt$$

wird.

6. Verfahren gemäß Anspruch 2, **dadurch gekennzeichnet, daß** die Zustandsgrößen (9) des beobachtbaren Untersystemes (19) des Gesamtsystemes (15) Klauenpolmaschine (1) mittels des Filterelementes (20) geschätzt werden.

7. Verfahren gemäß der Ansprüche 2 oder 3, **dadurch gekennzeichnet, daß** mit den geschätzten bzw. berechneten Zustandsgrößen des beobachtbaren Untersystemes (19) die Zustandsgrößen des unbeobachtbaren Untersystems (18) berechnet werden.

8. Verfahren gemäß der Ansprüche 6 oder 7, **dadurch gekennzeichnet, daß** die geschätzten Zustandsgrößen und die berechneten Zustandsgrößen der Untersysteme (18, 19) durch Verknüpfung mit einer Transformationsmatrix T rücktransformiert werden.

9. Verfahren gemäß Anspruch 6, **dadurch gekennzeichnet, daß** die Zustandsgrößen (9) die transformierten Ständerströme des d, q-Systemes, die Kreisfrequenz ω sowie den Polradwinkel des Läufers der Klauenpolmaschine (1) enthalten.

10. Verfahren gemäß Anspruch 1, **dadurch gekennzeichnet, daß** zur Ermittlung der Läuferanfangsposition im Erregerkreis (2, 32) der Klauenpolmaschine (1) eine zeitveränderliclie Spannungsquelle (32) angeordnet ist und eine Messung (33, 34) der Strangspannungen (5) der Ständerwicklung (4) erfolgt.

**Claims**

1. Method for determining the position of a rotating component of a claw-pole generator (1) which is operated using the R-Y-B system and whose control requires transformation of the stator variables from the R-Y-B system to the d, q system, and vice versa, **characterized in that** the claw-pole generator (1) is subdivided as an overall system (15) into a subsystem (18) which cannot be observed and into a subsystem (19, 29) which can be observed, contains a filter element (20) and produces output variables (17).

2. Method according to Claim 1, **characterized in that** the observable subsystem (19) contains a Kalman-Bucy filter element (20), which estimates the state variables of the observable subsystem (19).

3. Method according to Claim 1, **characterized in that** the observable subsystem (19) contains a state observer which recalculates the state variables of the observable subsystem (19) after a state change.

4. Method according to Claim 1, **characterized in that** the electrical machine (1) is subdivided by a transformation matrix T into a subsystem (18) which cannot be observed and a subsystem (19) which can be observed.

5. Method according to Claim 2, **characterized in that** an L-matrix (21) in the filter element (20) in the observable subsystem (19) optimizes a quadratic quality measure to determine:

$$J(u) = \int_{t_0}^{t_f} [x^T(t) \, Q \, x(t) + u^T(t) \, R \, u(t)] \, dt \qquad .$$

6. Method according to Claim 2, **characterized in that** the state variables (9) of the observable subsystem (19) of the overall system (15) of the claw-pole machine (1) are estimated by means of the filter element (20).

7. Method according to Claim 2 or 3, **characterized in that** the estimated or calculated state variables of the observable subsystem (19) are used to calculate the state variables of the subsystem (18) which cannot be observed.

8. Method according to Claim 6 or 7, **characterized in that** the estimated state variables and the calculated state variables of the subsystems (18, 19) are transformed back by linking to a transformation matrix T.

9. Method according to Claim 6, **characterized in that** the state variables (9) include the transformed stator currents in the d, q system, the circular frequency $\omega$ and the rotor angle of the rotor of the claw-pole machine (1).

10. Method according to Claim 1, **characterized in that** a voltage source (32) which varies over time is provided to determine the initial rotor position in the field circuit (2, 32) of the claw-pole machine (1), and the winding-section voltages (5) of the stator winding (4) are measured (33, 34).


**Revendications**

1. Procédé de détermination de la position d'un composant rotatif d'un générateur (1) à pôles à griffes utilisé dans le système R-S-T et dont la régulation impose la transformation des grandeurs du stator du système R-S-T au système d, q et inversement, **caractérisé en ce que** le générateur (1) à pôles à griffes est divisé en tant que système global (15) en un sous-système non observable (18) et en un sous-système observable (19, 29) qui contient un élément de filtre (20) et qui délivre des grandeurs de sortie (17).

2. Procédé selon la revendication 1, **caractérisé en ce qu'**un élément (20) de filtre de Kalman-Bucy qui estime les grandeurs d'état du sous-système observable (19) est repris dans le sous-système (19).

3. Procédé selon la revendication 1, **caractérisé en ce qu'**un observateur d'état qui recalcule les grandeurs d'état du sous-système observable (19) après une modification d'état est repris dans le sous-système observable (19).

**4.** Procédé selon la revendication 1, **caractérisé en ce que** la machine électrique (1) est divisée par une matrice de transformation T en un système non observable (18) et un système observable (19).

**5.** Procédé selon la revendication 2, **caractérisé en ce qu'**une matrice L (21) prévue dans l'élément (20) de filtre du sous-système observable (19) est déterminée à partir de l'optimisation d'une mesure quadratique de qualité

$$J(u) = \int_{t_0}^{t_f} [x^T(t) Q x(t) + u^T(t) R u(t)] dt$$

**6.** Procédé selon la revendication 2, **caractérisé en ce que** les grandeurs d'état (9) du sous-système observable (19) de l'ensemble du système (15) constitué par la machine (1) à pôles à griffes sont estimées au moyen de l'élément de filtre (20).

**7.** Procédé selon les revendications 2 ou 3, **caractérisé en ce que** les grandeurs d'état estimées ou calculées du sous-système observable (19) permettent de calculer les grandeurs d'état du sous-système non observable (18).

**8.** Procédé selon les revendications 6 ou 7, **caractérisé en ce que** les grandeurs d'état estimées et les grandeurs d'état calculées des sous-systèmes (18, 19) sont retransformées en étant convoluées avec une matrice de transformation T.

**9.** Procédé selon la revendication 6, **caractérisé en ce que** les grandeurs d'état (9) contiennent les courants transformés du stator du système d, q, la fréquence de cycle ω ainsi que l'angle de la roue polaire de l'induit de la machine (1) à pôles à griffes.

**10.** Procédé selon la revendication 1, **caractérisé en ce que** pour déterminer la position initiale de l'induit, une source de tension (32) variant dans le temps est disposée dans le circuit d'excitation (2, 32) de la machine (1) à pôles à griffes et une mesure (33, 34) des tensions de barre (5) de l'enroulement de stator (4) est effectuée.

## Fig.1

$U$

SM3~

R

S

T

1

5

3

2

4

## Fig.2

12

11

$\underline{u}$

$$\underline{\dot{x}} = \underline{A} \cdot \underline{x} + \underline{B} \cdot \underline{u} + \underline{r}(t)$$

$\underline{x}$

$\underline{C}$

p(t)

$\underline{y}$

7

10

9

13

8

14

Fig.3

$$\dot{\hat{\underline{x}}}_1 = \hat{\underline{A}}_{11} \cdot \hat{\underline{x}}_1 + \hat{\underline{A}}_{12} \cdot \hat{\underline{x}}_2 + \hat{\underline{B}}_1 \cdot \hat{\underline{u}}$$

$$\dot{\hat{\underline{x}}}_2 = \hat{\underline{A}}_{22} \cdot \hat{\underline{x}}_2 + \hat{\underline{B}}_2 \cdot \hat{\underline{u}}$$
$$\underline{y} = \hat{\underline{C}}_2 \cdot \hat{\underline{x}}_2$$

Fig.4

$$\dot{\hat{\underline{x}}}_2 = \hat{\underline{A}}_{22} \cdot \hat{\underline{x}}_2 + \hat{\underline{B}}_2 \cdot \hat{\underline{u}}$$

$$\hat{\underline{C}}_2$$

L

$$\hat{\underline{C}}_2$$

$$\hat{\underline{A}}_{22}$$

$$\underline{I}$$

## Fig.5

$$\underline{\dot{x}} = \underline{A} \cdot \underline{x} + \underline{B} \cdot \underline{u}$$

$$\underline{C}$$

$$\underline{\dot{\rho}} = \underline{F} \cdot \underline{\rho} + \underline{g} \cdot \underline{u} + \underline{N} \cdot \underline{y}$$

$$\underline{\hat{r}} = \underline{\rho} + \underline{L} \cdot \underline{y}$$

## Fig.6